# EUROPEAN PATENT SPECIFICATION

(11) **EP 3 833 637 B1**
(45) Date of publication and mention of the grant of the patent: **07.02.2024**
(21) Application number: 18839555.2
(22) Date of filing: 08.08.2018
(51) Int. Cl.: C02F 1/52, C02F 103/00, C02F 101/10, C02F 101/20, B01J 19/16

(54) **COMPOSITION FOR SUPPRESSING WATER EVAPORATION AND PROVIDING REHABILITATION TO BODIES OF WATER**
ZUSAMMENSETZUNG ZUR UNTERDRÜCKUNG DER WASSERVERDAMPFUNG UND ZUR REHABILITATION VON GEWÄSSERN
COMPOSITION POUR SUPPRIMER L'ÉVAPORATION DE L'EAU ET PERMETTRE UNE RÉHABILITATION DE CORPS D'EAU

(43) Date of publication of application: 16.06.2021
(73) Proprietor: TURKUAZ DOGA VE SU KORUMA TEKNOLOJILERI A.S., Istanbul (TR)
(72) Inventor: DILBER, Kerem, Beykoz/Istanbul (TR)
(74) Representative: Atalay, Baris
(86) International application number: PCT/TR2018/050424
(87) International publication number: WO 2020/032879

(56) References cited:
- US-A1- 2006 029 801
- US-B1- 6 303 133

## Description

### Technical Field of the Present Invention

The present invention relates to a composition for suppressing water evaporation in bodies of water, such as lakes, dams, ponds, reservoirs and pools and thereby reducing loss of water due to evaporation. Said composition proposed by the present invention also prevents eutrophication, thereby reducing the amount of purification treatments required and increasing the possibility of recreational activities on lakes and other bodies of water.

### Background of the Present Invention

The shortage of fresh water becomes more and more acute with the development of industry and growth of the populations, especially in arid regions such as the Middle East, North- and Central Africa. Therefore it is important to preserve the available water resources in natural and artificial open outdoor water basins, like lakes, dams, ponds, reservoirs and pools. However, these basins suffer losses that are mainly due to evaporation. The major factors that influence evaporation are temperature, humidity, the wind and exposed surface area. The annual evaporation volumes at high air temperatures and under direct exposure to the sun may reach 1.5-2.5 m³/m² of water (Segal and Burstein. Water Resour Manage. 2010. 24:129-137).

Among the various techniques for reducing evaporation loss, mechanical devices, such as shade balls and floating covers, are effective for small storages, but they are not feasible for large areas of water such as reservoirs. For large storage the use of surface covering by a monolayer molecular film to reduce evaporation loss from large open water surfaces offers the greatest promise. This is the only system that retains the water surface in a state that does not interfere with other uses of the body of water such as boating, navigation recreation, fish, and wildlife propagation. Various experiments and field trials worldwide have shown that fatty alcohols and their emulsions retard water evaporation and result in saving up to 20% to 50% of water (Panjabi et al. Open Journal of Civil Engineering. 2016. 6:346-357).

Patent document US 3,205,059 discloses a method for preventing water evaporation utilizing hexadecanol (cetyl alcohol) and octadecanol (stearyl alcohol) monolayers spread over the water surface. Patent document US 3,450,488 discloses a composition comprising a binary blend of a saturated alcohol and its next adjacent higher homolog. Patent document US 6,303,133 discloses a composition for suppressing water evaporation comprising aliphatic alcohols and an earth metal hydroxide. However, fatty alcohols used in the state of the art cause foaming, therefore reducing the efficiency and suitability of the monolayer to suppress water evaporation.

Patent document US 3,446,571 discloses a composition comprising a porous inert solid material impregnated with a water insoluble film forming agent to be placed in a body of ground surface water to retard the evaporation of water. However, the density of the porous solid used in said composition makes it difficult to prepare a homogeneous mixture on the water surface, and the porous solid may remain in the water without disintegrating.

Patent document US 3,391,987 discloses a composition comprising fatty alcohols and a water-soluble saccharide carrier for retarding evaporation of water. However, saccharides are hard to decompose and may build up in the environment as a contaminant.

Patent document US 3,415,614 discloses a composition comprising fatty alcohols and a dispersing agent, namely, a heterocyclic compound having a five-membered ring such as tetrahdyrofuran or tetrahdyrofurfuryl alcohol. However, the toxicity of these dispersing agents makes these compositions unsuitable for use, especially for drinking and irrigation waters.

Patent document US 3,980,490 discloses a soil stabilizing agent comprising calcium carbonate, sulfuric acid sludge and a reaction product consisting of hydrocarbons with a carbon chain of 12 or more. Similarly, patent document US 2001/0022355 discloses a composition for water conservation comprising higher fatty alcohols with a carbon chain of 12 or more, and a calcium compound such as lime or acidified gypsum. However, the heavy oils used in this invention could prevent exchange of gases (such as oxygen) through the atmosphere/water interface, and therefore be dangerous to aquatic life. Moreover this agent is acidic, which is unsuitable for use in bodies of water.

Eutrophication as a result of anthropogenic impact is one of the commonest causes of the deterioration of the quality of water bodies located in the most populated and industrialized areas of the world. In the last few years, liming with CaO, Ca(OH)₂, and CaCO₃ has been successfully used to treat natural pond, man-made ponds, experimental enclosures, and hardwater lakes. In hardwater lakes, the addition of lime simulates the natural process of calcite biogenic precipitation. This process is caused by the precipitation of calcium carbonate when the lake water is supersaturated with it. During calcium carbonate precipitation, phosphorus is incorporated into the calcite crystals and precipitates out of solution. Insofar as it imitates a natural process, liming has fewer negative effects on biota than other chemicals used to control algal biomass. Moreover, lime addition can also induce phytoplankton flocculation and decrease water transparency, further reducing phytoplankton biomass and slowing down the photosynthetic activity (Leoni et al. Limnology. 2007. 8:121-130).

Patent document US 2006/029801 discloses a coated powder comprising amphiphilic compounds and powder particles of ionic compounds suitable for dispersing onto the surface of a body of water as an evaporation suppressing monolayer. Similarly, patent document US 6,303,133 discloses a powder composition comprising a monolayer-forming hexadecanol and/or octadecanol and an alkaline earth metal hydroxide for dispersing on the surface of a still or moving body of water. However, these inventions do not provide the tunability, coverage, thickness and resistance properties needed in the art.

The present invention proposes a composition comprising alkali metal and/or earth alkali metal salts of stearate and oleate and calcium hydroxide. Said composition has a dual effect of suppressing water evaporation and reducing eutrophication in water sources.

The present invention provides a composition provided by the characterizing features defined in Claim 1.

### Objects of the Present Invention

The object of the invention is to provide a composition for forming an evaporation suppressing thin film upon a body of water.

A further object of the invention is to provide a composition for providing rehabilitation by reducing eutrophication in a body of water.

A further object of the invention is to provide a composition comprising alkali metal and/or earth alkali metal salts of stearate and oleate and calcium hydroxide for suppressing water evaporation and reducing eutrophication in a body of water.

A further object of the invention is to provide a composition comprising calcium stearate and sodium oleate and calcium hydroxide for suppressing water evaporation and reducing eutrophication in a body of water.

### Detailed Description of the Present Invention

The solutions provided in the art for suppressing water evaporation using chemical means have two major disadvantages. Compositions utilizing fatty alcohols as film forming agents provide films with good coverage but poor mechanical properties. Moreover, fatty alcohols are rapidly decomposed and volatile under direct sunlight, decreasing their evaporation retardation effect. Compositions utilizing heavy hydrocarbon 'oils' prevent exchange of air through the water/atmosphere interface, which endangers aquatic life. In contrast, the present invention utilizes calcium stearate and sodium oleate as film forming agents, which provide films having tunable thickness with good coverage and mass transfer properties that are more resistant to direct sunlight.

In addition, the solutions provided in the art for suppressing water evaporation using mechanical means have two major disadvantages. Mechanical means, such as solar panels or shade balls, prevent mass transfer between water and atmosphere which poses a danger to aquatic life. Moreover, these can easily be stolen or damaged due to climatic conditions. In contrast, the film forming agents of the invention are chemically dispersed on the water surface; therefore they cannot be stolen and are more resistant to changes in climatic conditions.

The present invention proposes a composition for suppressing water evaporation in bodies of water, such as lakes, dams, ponds, reservoirs and pools and thereby reducing loss of water. Said composition proposed by the present invention also prevents eutrophication, thereby reducing the amount of purification treatments required and increasing the possibility of recreational activities on lakes and other bodies of water. Another advantage of said composition is that it provides coverage of a large area with a relatively small amount of product (250 g/hectare water surface).

In a preferred embodiment of the invention, said composition comprises calcium stearate and sodium oleate. Unlike fatty alcohols used in prior art, calcium stearate and sodium oleate used in the invention provide films that can be applied by using small amounts of material. Additionally, said films have thickness and resistance properties that are conveniently tunable by changing the amount of calcium stearate and sodium oleate in the composition. This allows for a film that is easily adjustable based on the climatic and geographic conditions of the area where the body of water is located, which allows the invention to be used in a wide variety of places. In order to increase the mechanical stability of fatty alcohol films, it is needed to add more fatty alcohols which increases foaming in the water.

The optimum amounts of calcium stearate and sodium oleate were determined for obtaining good dispersion properties, stable films and consistent thickness. Most advantageously, the composition comprises calcium stearate and sodium oleate between 4% and 8%. This composition forms films having high resistance to outside elements on the water surface such as wind and waves.

The particle size of the composition also has an effect of film quality and dispersion properties. In a preferred embodiment of the invention, said composition is in the form of particles which are 100 to 200 microns in diameter.

In a preferred embodiment of the invention, said composition comprises calcium stearate and sodium oleate as film forming agents and calcium hydroxide as dispersing and rehabilitation agent.

Water treatment with coagulants, specifically hydrolyzing metal salts such as alum and ferric chloride, has long been recognized as an effective method for removing arsenic from source waters (Hering et al. J Am Water Works Assoc. 1996. 88:155-167). Ferric chlorides do not interfere with evaporation or rehabilitation of the water source. In a preferred embodiment of the invention, said composition for suppressing water evaporation also comprises ferric chlorides to remove trace heavy metals, such as arsenic, from water.

### Examples

The following examples are provided to illustrate the present invention and are not intended to limit the scope of the invention. Experiments below were conducted using a preferred embodiment of the invention, comprising calcium stearate and sodium oleate between 4% and 8% and calcium hydroxide as balance.

### Example 1: Effect of calcium hydroxide

As mentioned above, calcium hydroxide has the effect of rehabilitating the water sources by precipitating phosphate out and reversing the negative effect of eutrophication. Table 1 shows the change in concentration of phosphate in 6 different locations in a municipal water source in Istanbul over 30 days of treatment with the preferred composition. It can be seen that phosphate concentration is decreased by the treatment.

**Table 1 Concentration of phosphate (ppm)**

| Location | | Day 0 | Day 15 | Day 30 |
|---|---|---|---|---|
| 1 | Surface | 0.10 | 0.04 | <0.01 |
| | Bottom | 0.14 | 0.08 | <0.01 |
| 2 | Surface | 0.13 | 0.01 | <0.01 |
| | Bottom | 0.18 | 0.01 | <0.01 |
| 3 | Surface | 0.10 | 0.01 | <0.01 |
| | Bottom | 0.13 | 0.01 | 0.01 |
| 4 | Surface | 0.11 | 0.01 | 0.01 |
| | Bottom | 0.14 | 0.01 | 0.01 |
| 5 | Surface | 0.12 | 0.01 | <0.01 |
| 6 | Surface | 0.25 | 0.01 | <0.01 |
| | Bottom | 0.37 | 0.01 | <0.01 |

### Example 2: Effect of calcium stearate and sodium oleate

An important aspect to consider when using an evaporation suppressing film in water sources is ensuring oxygen exchange across film to preserve aquatic life. Table 2 shows the change in concentration of dissolved oxygen in 6 different locations in a municipal water source in Istanbul over 30 days of treatment with the preferred composition. It can be seen that dissolved oxygen concentration is mostly unchanged by the treatment.

**Table 2 Concentration of dissolved oxygen (ppm)**

| Location | | Day 0 | Day 15 | Day 30 |
|---|---|---|---|---|
| 1 | Surface | 9.5 | 15.24 | 6.99 |
| | Bottom | 6.84 | 11.78 | 8.76 |
| 2 | Surface | 13.3 | 14.25 | 6.16 |
| | Bottom | 6.92 | 9.27 | 4.64 |
| 3 | Surface | 10.83 | 13.11 | 6.92 |
| | Bottom | 4.41 | 11.97 | 4.56 |
| 4 | Surface | 11.25 | 14.44 | 7.9 |
| | Bottom | 5.13 | 2.28 | 7.52 |
| 5 | Surface | 10.34 | 13.3 | 7.9 |
| 6 | Surface | 13.45 | 14.17 | 8.17 |
| | Bottom | 5.36 | 9.69 | 3.84 |

## Claims

1. A composition for forming an evaporation suppressing thin film upon a body of water, wherein said composition consists of 4 to 8% by weight of a mixture of calcium stearate and sodium oleate, hydroxide of an alkali metal or earth alkali metal and, preferably, iron (III) chloride and said composition is in the form of particles which are 100 to 200 microns in diameter.

2. A composition as set forth in Claim 1, wherein said hydroxide of an alkali metal or earth alkali metal is calcium hydroxide.

3. Use of a composition as set forth in any preceding Claim for suppressing water evaporation and reducing eutrophication in bodies of water.

## Patentansprüche

1. Zusammensetzung zur Bildung eines dünnen Films zur Unterdrückung der Verdunstung auf einer Wassermasse, wobei die Zusammensetzung aus 4 bis 8 Gewichtsprozent einer Mischung aus Calciumstearat und Natriumoleat, Hydroxid eines Alkalimetalls oder Erdalkalimetalls und vorzugsweise Eisen(III)-chlorid besteht und die Zusammensetzung in Form von Teilchen mit einem Durchmesser von 100 bis 200 Mikrometern vorliegt.

2. Zusammensetzung nach Anspruch 1, wobei das Hydroxid eines Alkalimetalls oder Erdalkalimetalls Calciumhydroxid ist.

3. Verwendung einer Zusammensetzung nach irgendeinem der vorhergehenden Ansprüche zur Unterdrückung der Wasserverdunstung und zur Verringerung der Eutrophierung in Gewässern.

## Revendications

1. Composition destinée à former un film mince supprimant l'évaporation sur une masse d'eau, dans laquelle cette composition est constituée de 4 à 8 % en poids d'un mélange de stéarate de calcium et d'oléate de sodium, d'hydroxyde d'un métal alcalin ou d'un métal alcalin terrestre et, de préférence, de chlorure de fer (III) et cette composition se présente sous la forme de particules d'un diamètre de 100 à 200 microns.

2. Composition selon la revendication 1, dans laquelle l'hydroxyde d'un métal alcalin ou d'un métal alcalin terrestre est l'hydroxyde de calcium.

3. Utilisation d'une composition telle que décrite dans l'une des revendications précédentes pour supprimer l'évaporation de l'eau et réduire l'eutrophisation dans les masses d'eau.
